Europäisches Patentamt

European Patent Office

Office européen des brevets

(11) Numéro de publication: **0 512 897 B1**

# FASCICULE DE BREVET EUROPEEN

(45) Date de publication de fascicule du brevet: **08.02.95**  (51) Int. Cl.⁶: **B64C 25/52**

(21) Numéro de dépôt: **92401222.2**

(22) Date de dépôt: **29.04.92**

(54) **Train d'atterrissage pour aérodyne, avec arceaux en matériau composite.**

(30) Priorité: **06.05.91 FR 9105525**

(43) Date de publication de la demande:
**11.11.92 Bulletin  92/46**

(45) Mention de la délivrance du brevet:
**08.02.95 Bulletin  95/06**

(84) Etats contractants désignés:
**DE GB IT**

(56) Documents cités:
**FR-A- 1 272 208**
**FR-A- 1 578 594**
**FR-A- 2 372 081**
**US-A- 4 544 116**

(73) Titulaire: **AEROSPATIALE Société Nationale
Industrielle
37, Boulevard de Montmorency
F-75781 Paris Cédex 16 (FR)**

(72) Inventeur: **Guimbal, Bruno
Les Ouatre-Saisons-Saint Hilaire
F-13290 Les Milles (FR)**

(74) Mandataire: **Phélip, Bruno et al
c/o Cabinet Harlé & Phélip
21, rue de La Rochefoucauld
F-75009 Paris (FR)**

**Description**

La présente invention a pour objet un train d'atterrissage pour aérodyne , notamment pour hélicoptère . Le train d'atterrissage proposé par l'invention est du type à patins dont les arceaux ou traverses sont réalisés en matériau composite . Il est particulièrement adapté pour équiper des hélicoptères du type léger .

De façon classique , les trains d'atterrissage à patins ou organes de contact analogues ,tels que des skis ,des flotteurs, etc., comprennent principalement deux tels organes, reliés entre eux et au fuselage de l'aérodyne par deux traverses en forme d'arceaux, dont les branches latérales s'appuient sur les patins , qui eux-mêmes sont prévus pour venir en contact avec la surface de réception de l'aérodyne. Dans la présente description, on utilisera indifféremment le terme "arceau" ou "traverse" pour qualifier cette partie du train d'atterrissage . Dans le cas d'un hélicoptère , notamment , ces traverses peuvent être également associées à des amortisseurs hydrauliques destinés à amortir les oscillations permises par le train d'atterrissage lorsque l'appareil est au sol et que le rotor tourne, de façon à éviter l'entrée en résonance de la cellule de l'hélicoptère sur son train d'atterrissage .

A l'atterrissage, l'énergie d'impact est absorbée par déformation élastique et plastique des jambes des traverses et des liaisons entre le fuselage de l'hélicoptère et lesdites traverses . De façon courante , ces jambes sont réalisées en acier ou autre alliage choisi pour sa bonne propriété de déformation .

Ce type de train d'atterrissage n'est pas sans présenter certains inconvénients . En particulier , il est fréquent que des atterrissages à des vitesses verticales élevées , ou atterrissages " durs" , déforment plastiquement traverses et patins , qu'il devient alors nécessaire de remplacer . En outre, si les alliages dans lesquels sont réalisées ces traverses sont choisis pour leur grande déformation à la rupture, en contrepartie, les efforts qu'ils supportent sont rapidement saturés en phase plastique, de sorte que le moindre atterrissage à une vitesse quelque peu élevée transmet à la cellule de l'aérodyne un facteur de charge proche de la valeur de saturation et parait "dur, surtout s'il s'agit d'une cellule de faible masse. Egalement, ces trains d'atterrissage peuvent subir une corrosion importante, qui oblige à les changer régulièrement. Par ailleurs encore, des trains d'atterrissage de ce type sont d'une grande raideur élastique lorsque l'aérodyne est au sol. Les amortisseurs anti-résonance-sol précités qui leur sont associés sont appelés à fonctionner sur des très faibles courses ce qui compromet leur efficacité.

Pour pallier les inconvénients des trains métalliques à patins, il a déjà été proposé de réaliser les traverses des atterrisseurs en des matériaux composites. A titre d'exemple, on peut citer notamment le train d'atterrissage décrit dans le brevet français de la demanderesse publié sous le numéro 2.554.210, dont les traverses sont des poutres flexibles en matériau composite stratifié. Ces poutres sont constituées par des semelles, reliées deux à deux par des voiles qui leur sont perpendiculaires. Ces poutres sont associées à des plots élastomériques intercalés entre lesdites semelles et destinés à absorber une partie d'énergie de déformation desdites semelles lorsque lesdites poutres sont sollicitées à l'atterrissage.

Un autre document illustratif de la technique antérieure est le brevet US 4.270.711, qui décrit un train d'atterrissage à patins pour hélicoptères dont les traverses ont des formes d'arceaux. La traverse avant du train d'atterrissage est fixée en deux points au fuselage de l'hélicoptère, la traverse arrière étant articulée sur ledit fuselage par une liaison pivot déportée par rapport à la fibre médiane de ladite traverse. Cependant, ce document ne fait aucunement état du matériau dans lequel sont réalisées lesdites traverses. La liaison patin-traverse est une liaison classique à encastrement rigide et les fortes déformations aux atterrissages durs sont essentiellement absorbées par la liaison traverse arrière/fuselage.L'architecture du train d'atterrissage du brevet US 4 270 711 ne permet aucun freinage du rebond du train d'atterrissage, par déplacement horizontal des patins ou organes de contact sous l'effet de la flexion des traverses au cours d'un atterrissage .

La présente invention a pour objet un train d'atterrissage de conception nouvelle pour aérodyne , avantageusement pour hélicoptère , grâce à la réalisation originale des traverses ou arceaux et également à l'architecture du train, laquelle comporte des liaisons perfectionnées entre traverses et patins ainsi qu'entre traverses et fuselage , afin d'obtenir un comportement optimal de l'appareil en cas d'atterrissage "dur" ,même lors d'un atterrissage glissé ou ripé.

La présente invention a donc pour objet un train d'atterrissage pour aérodyne, et notamment pour hélicoptère, du type comprenant des organes de contact avec le sol, tels que des patins, des skis , des flotteurs ou des organes analogues , lesdits organes étant reliés entre eux et au fuselage de l'aérodyne par au moins deux arceaux ou traverses en matériau composite , caractérisé en ce que lesdites traverses sont réalisées en un matériau stratifié à grande capacité d'absorption élastique et en ce qu'elles ont une forme fortement cintrée au niveau de leurs parties centrales par lesquelles elles sont reliées au fuselage de l'aérodyne, la liaison entre lesdites traverses et ledit fuselage étant une liaison à encastrement longitudinal par rapport audit aérodyne, lesdits organes de contact avec le sol étant reliés auxdites traverses par des moyens d'articulation, qui autorisent des grandes déformées desdites traverses sans torsion desdits organes latéraux.

Le train d'atterrissage selon l'invention, à patins ou à organes de contact analogues ,dans lequel les traverses sont en matériau composite , est d'un type nouveau . En particulier , les traverses ont des formes d'arceaux très fortement cintrés et sont en des matériaux composites stratifiés constitués de fibres à haute résistance agglomérées par une résine synthétique thermodurcie , qui ont une grande capacité d'absorption et de déformation élastique . Lors d'un atterrissage , de telles traverses se déforment élastiquement en flexion sur une plage de déforma:ion beaucoup plus importante que celles constituées avec un matériau métallique, de sorte que la déformation verticale desdites traverses est accompagnée par un déplacement horizontal de leurs extrémités. Ce déplacement horizontal des extrémités des traverses ou arceaux permet , par frottement des patins ou organes de contact analogues sur le sol , un amortissement efficace de l'ensemble du mouvement d'atterrissage et notamment du rebond, tandis que la déformation verticale des traverses traduit l'absorption d'énergie cinétique de descente de l'aérodyne . Il est à noter que cette forme générale à grande courbure des traverses permet de réduire considérablement les contraintes normales que subissent les matériaux dans lesquels elles sont réalisées .

Afin d'assurer une bonne tenue mécanique de l'ensemble du train d'atterrissage , notamment aux fortes sollicitations en torsion des patins et traverses lors d'atterrissages glissés ou ripés , l'invention propose une architecture générale de train d'atterrissage , dans laquelle, contrairement à l'architecture classique , les deux traverses du train d'atterrissage sont libres de se débattre transversalement mais sont encastrées longitudinalement par rapport au fuselage de l'aérodyne , tandis que les patins ou les organes analogues de contact avec le sol sont reliés auxdites traverses par des liaisons articulées qui autorisent de grandes déformations des traverses sans torsion desdits organes de contact avec le sol. Les déformées et différences de déformées qui peuvent apparaître sur les traverses d'un même train, selon les situations d'atterrissages , rendent , en effet, impossible toute liaison rigide traverses/patins. Ainsi, par exemple, un atterrisage arrière " dur " où seule la traverse ou arceau arrière se déforme , peut introduire une rotation de 20° de l'extrémité de la traverse par rapport au patin.

Avantageusement , afin de donner à l'hélicoptère un bon équilibre latéral d'appui au sol, au moins une des deux traverses ( et préférentiellement les deux ) est reliée au fuselage de l'aérodyne en au moins deux points de part et d'autre du plan de symétrie longitudinal . L'invention propose, de façon particulièrement avantageuse , de réaliser ces deux liaisons par l'intermédiaire d'attaches pivotant autour d'axes parallèles à l'axe longitudinal de l'aérodyne et déportés par rapport à la traverse ou arceau à laquelle ils sont associés .Ce déport est choisi de façon que l'allongement de ladite traverse en sa partie centrale entre les deux attaches lors de la flexion dudit arceau au cours d'un atterrissage , soit compensé par la rotation des attaches autour desdits axes de fixation . Cette caractéristique complémentaire est d'autant plus nécessaire pour éviter une variation d'entraxe des liaisons arceaux-fuselages , dans le cas de traverses à grande courbure et à forte élasticité, qu'une grande partie de l'énergie d'atterrissage est absorbée par la déformée de cette partie centrale . Bien entendu, ces deux liaisons pivotantes assurent également , lors d'atterrissages glissés ou ripés , la rotation angulaire des jambes de l'arceau sous charge .

Avantageusement , les traverses sont des lames flexibles réalisées en un matériau composite stratifié . Le matériau principal dans lequel sont réalisées les traverses pour assurer leur résistance en flexion et en traction/compression est de préférence un faisceau de fibres de verre imprégnées de résine synthétique thermodurcissable et empilées unidirectionnellement . Pour le rigidifer en torsion, ce faisceau peut être enrobé par une peau de fibres de verre imprégnées de résine thermodurcie tissées , dont les fibres sont croisées par rapport aux fibres unidirectionnelles dudit faisceau . Ainsi, les fibres de verre de la peau qui enrobe le faisceau de fibres de verre peuvent , par exemple , être orientées à plus au moins 45° par rapport aux fibres unidirectionnelles dudit faisceau .

De préférence , les traverses sont de section évolutive optimisée pou: une meilleure répartition des contraintes en flexion verticale et en flexion horizontale. Elles peuvent ainsi avoir une section effilée , notamment une section sensiblement elliptique . Leur section peut aller en décroissant de leur partie centrale vers leurs extrémités. Elles sont notamment réalisées par empilage des fibres unidirectionnelles avec arrêt progressif d'une partie de ces fibres , afin de réaliser la section évolutive isocontrainte. Les fibres arrêtées sont alors des fibres proches des fibres centrales des traverses.

L'ensemble de la traverse ainsi constitué à l'état humide est déposé dans un moule en forme et mis en chauffe sous pression pour assurer la polymérisation de la résine d'agglomération des fibres.

De préférence encore ,la traverse disposée à l'avant de l'aérodyne est sensiblement en arc de cercle; la traverse disposée à l'arrière de l'aérodyne est sensiblement parabolique .

De façon avantageuse , une liaison entre une traverse et le fuselage de l'aérodyne est réalisée par l'intermédiaire de deux carcans , dans lesquels ladite traverse est encastrée au niveau de sa partie centrale

EP 0 512 897 B1

, chacun de ces deux carcans étant articulé sur le fuselage de l'aérodyne par une liaison pivot autour d'un axe longitudinal par rapport à l'aérodyne . Les axes d'articulation en pivotement desdits carcans sont de préférence déportés par rapport à la fibre neutre de la traverse que lesdits carcans portent . Un tel carcan peut être réalisé en un matériau métallique collé sur la traverse à laquelle il est associé ou en un matériau composite surmoulé sur ladite traverse .

De façon préférentielle , les moyens d'articulation entre une traverse et un patin ou organe de contact similaire comprennent un étrier relié audit organe de contact et solidarisé à l'une des extrémités de ladite traverse , notamment par l'intermédiaire d'un fourreau élastomérique polymérisé sur ladite traverse, ainsi que sur une paroi dudit étrier . Les étriers associés à la traverse arrière du train d'atterrissage peuvent être aptes à pivoter par rapport aux organes de contact avec le sol sur lesquels ils sont montés autour d'axes sensiblement perpendiculaires auxdits organes et s'étendant selon une direction sensiblement radiale par rapport à ladite traverse arrière . Avantageusement les moyens d'articulation entre les traverses et les organes de contact avec le sol comprennent également des sabots anti-usure qui entourent partiellement lesdits organes de contact au droit desdites traverses et au niveau de leurs parties par lesquelles ils sont destinés à être en contact avec le sol . Les sabots anti-usure associés aux traverses avant dudit train d'atterrissage sont solidarisés des étriers de liaison associés à ladite traverse avant , tandis que les sabots anti-usure associés à la traverse arrière sont reliés aux étriers associés à ladite traverse arrière par une liaison autorisant leur pivotement relatif autour de l'axe de pivotement étrier/organe de contact avec le sol. La traverse arrière peut être également reliée au fuselage de l'aérodyne par l'intermédiaire d'amortisseurs d'anti-résonance sol .

La description qui suit d'un mode de réalisation possible de l'invention est purement illustrative et non limitative . Elle doit être lue en regard des dessins annexés sur lesquels :

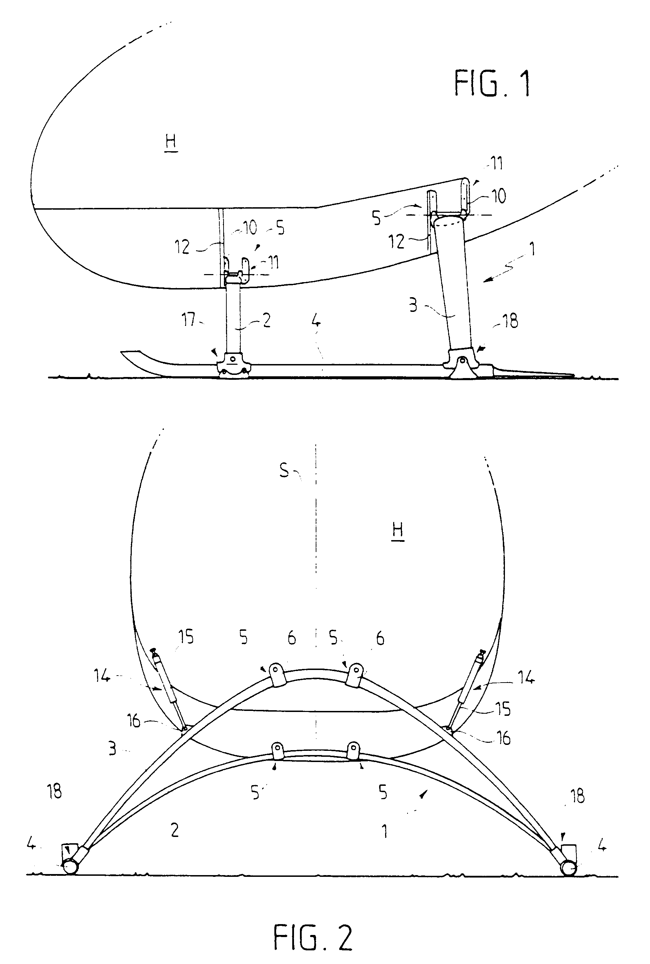

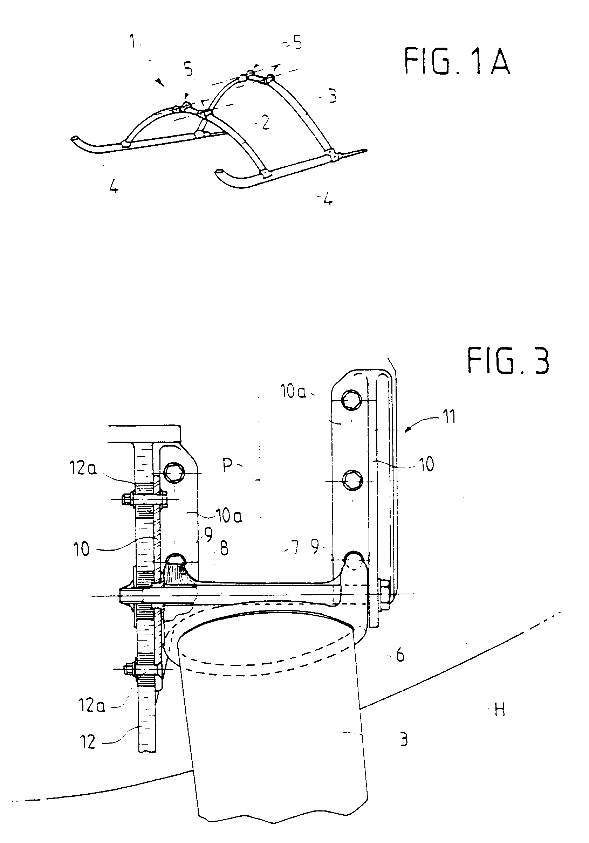

La figure 1A est une représentation schématique en perspective d'un train d'atterrissage conforme à l'invention;

La figure 1 est une vue de côté schématique d'un hélicoptère équipé du train d'atterrissage de la figure 1A;

La figure 2 est une vue arrière de l'hélicoptère de la figure 1 ;

La figure 3 est une vue en coupe d'un détail de liaison entre la traverse arrière dudit train d'atterrissage et le fuselage de l'hélicoptère des figures 1 et 2;

Les figures 4 et 5 sont des vues de côté de détails des liaisons entre les patins ou organes de contact du train d'atterrissage conforme à l'invention et respectivement les traverses avant et arrière dudit train d'atterrissage ;

Les figures 6 et 7 sont des vues en coupe selon respectivement les lignes VI-VI et VII-VII des figures 4 et 5;

La figure 8 est une vue en coupe selon la ligne VIII-VIII de la figure 1 de la traverse arrière du train d'atterrissage conforme à l'invention;

La figure 9 est une représentation schématique en coupe et en perspective avec arraché d'un détail d'une traverse avant ou arrière du train d'atterrissage conforme à l'invention ;

Les figures 10 et 11 , enfin, illustrent schématiquement le comportement aux sollicitations en flexion de traverses d'un train d'atterrissage selon que ces traverses sont articulées en deux points sur le fuselage de l'aérodyne auquel elles sont associées , respectivement avec ou sans déports de leur axe d'articulation par rapport à leur fibre médiane .

En se référant plus particulièrement aux figures 1A, 1 et 2 , on voit qu'un train d'atterrissage 1 , monté sur un aérodyne H , du type hélicoptère , comprend essentiellement deux traverses 2 et 3 montées sur ledit appareil H de part et d'autre du centre de gravité de celui-ci. La traverse 2 est disposée à l'avant de l'appareil H et la traverse 3 à l'arrière . Ces traverses 2 et 3 sont reliées mécaniquement , au niveau de leurs extrémités , à deux patins latéraux 4 destinés à servir d'organes de contact avec le sol. Ces deux patins 4 sont deux patins classiques tubulaires en alliage léger . Ils pourraient être bien entendu remplacés par d'autres organes de contact avec le sol analogues , tels que des skis ou des flotteurs .

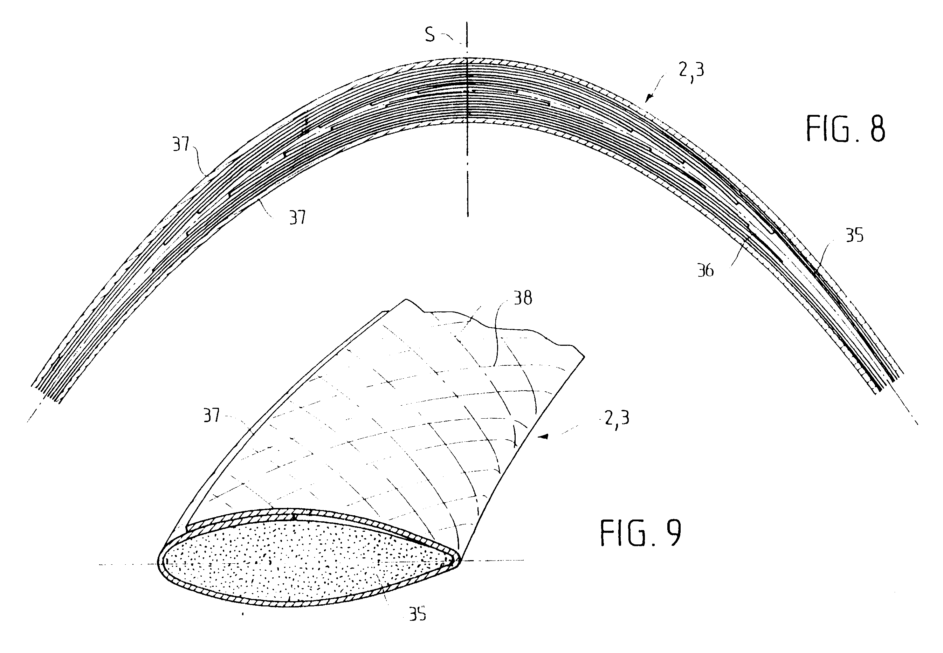

Chacune des deux traverses 2 et 3 est un arceau fortement cintré réalisé en un matériau composite en fibres de verre décrit ci-après plus en détails en référence aux figures 8 et 9 . La traverse 2 avant a une forme principale d'arc de cercle , tandis que la traverse 3 arrière a une forme parabolique . Ces formes d'exécution ne sont que des exemples.

Ainsi, la traverse 2 peut aussi avoir une forme parabolique . L'invention se caractérise en effet par une forme nettement accentuée en arceau donnée aux traverses.

Chacune de ces deux traverses 2 et 3 est reliée à la structure de fuselage de l'hélicoptère H par deux liaisons référencées chacune par 5 . Ces liaisons 5 réalisent un encastrement longitudinal des traverses 2 et 3 par rapport au fuselage de l'hélicoptère H : elles s'opposent à tout mouvement des parties centrales des

4

traverses 2 et 3 selon une direction longitudinale par rapport à l'appareil H. Les liaisons 5 avant et arrière sont analogues .

La traverse 3 arrière est également reliée au fuselage de l'hélicoptère H par deux petits amortisseurs hydrauliques 14 répartis symétriquement de part et d'autre du plan S longitudinal de symétrie du fuselage de l'hélicoptère H et de son train d'atterrissage 1 . La liaison entre un amortisseur 14 et la traverse arrière 3 est réalisée par articulation de l'extrémité libre de la tige 15 dudit amortisseur 14 sur une oreille 16 dont est munie en saillie la traverse 3 . Le corps principal dudit amortisseur 14 est quant à lui articulé, à son extrémité opposée à l'extrémité libre de ladite tige 15 , sur le fuselage de l'hélicoptère H.

Les liaisons entre les extrémités des traverses 2 et 3 et les patins 4 sont réalisées par des moyens d'articulation référencés respectivement par 17 et 18.

En se référant plus particulièrement à la figure 3 représentant un détail d'une des deux liaisons 5 reliant la traverse 3 arrière à la structure du fuselage de l'hélicoptère H , on voit qu'une telle liaison est principalement réalisée par l'intermédiaire d'un carcan 6 ayant une forme intérieure qui épouse sensiblement la forme extérieure de la traverse 3. Ce carcan d'encastrement 6 est traversé par un évidement cylindrique 7 déporté radialement par rapport à la traverse 3 et destiné à recevoir un axe 8 de fixation et de pivotement , qui est une vis s'étendant longitudinalement par rapport au fuselage de l'hélicoptère H. L'axe de cette vis 8 et de l'évidement 7 est déporté au-dessus de l'axe neutre de la traverse 3 . En sa partie supérieure , c'est-à-dire celle destinée à être la plus éloignée des extrémités de la traverse 3 que portent les patins 4 , le carcan 6 est renforcé latéralement , de part et d'autre du plan médian P de la liaison 5 , par des épaulements de renfort 9 en saillie par rapport à la partie médiane dudit carcan 6. Ces épaulements 9 sont destinés à venir en butée contre deux plaques 10 délimitant ensemble une structure 11 de caisson centrale et assurant l'encastrement longitudinal du carcan 6 . Ces plaques 10 , perpendiculaires à la direction longitudinale du fuselage de l'hélicoptère H , sont solidarisées audit fuselage par vissage d'une part de bords latéraux 10a en L ou T qui terminent lesdites plaques 10 au niveau de leurs portions de contour qui se trouvent au niveau dudit fuselage et , d'autre part ,de la plaque 10 avant du caisson 11 sur une poutre ou plaque 12 formant oreille de liaison solidaire du fuselage de l'hélicoptère H et en saillie par rapport audit fuselage . Cette poutre 12 est également perpendiculaire à la direction longitudinale de l'appareil H. Elle est solidarisée à ladite plaque 10 avant par quatre vis 12a parallèles à l'axe de la vis 8 et réparties selon un carré autour de celui-ci. La vis 8 traverse les deux plaques 10, ainsi que la plaque 12. Sa tête s'appuie sur la face arrière de la plaque 10 arrière . Son extrémité opposée est filetée et est en saillie par rapport à la face avant de la poutre 12, son filetage coopérant avec le filetage complémentaire d'un boulon 13 qui s'appuie sur ladite face avant de la poutre 12 , pour maintenir ladite vis 8 et le carcan 6 en place sur le caisson 11.

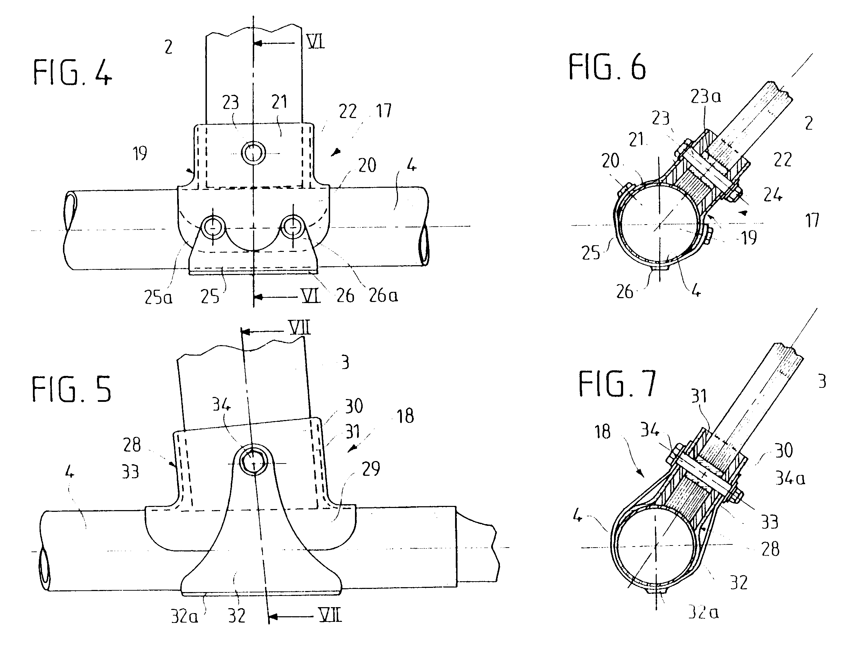

Ainsi qu'on peut le voir plus particulièrement sur les figures 4 et 6 , les moyens 17 réalisant la liaison articulée entre la traverse 2 avant et les patins 4 comportent essentiellement un étrier 19 dont une partie 20 formant selle épouse sensiblement la forme du patin 4 auquel ledit étrier 19 est associé , sur une petite portion de longueur dudit patin 4 et sur sensiblement une demie section de celui-ci . Cette partie 20 formant selle est prolongée , en sa partie médiane par un manchon 21 destiné à recevoir une extrémité de la traverse 2 . Ce manchon 21 a une forme intérieure qui correspond sensiblement à celle de ladite traverse 2 au niveau de cette extrémité .Il est solidarisé de ladite traverse 2 par un fourreau élastomérique 22 polymérisé à la forme intérieure dudit manchon 21 et à la forme de la traverse 2 entre lesquels il est intercalé . L'extrémité de cette traverse 2 est en contact avec le patin 4 , dont elle épouse sensiblement la forme de sa face de contact . Le manchon 21 et donc l'étrier 19 , sont en outre solidarisés de ladite traverse 2 par l'intermédiaire d'une vis 23 qui s'étend à travers ladite traverse 2 en traversant les parois dudit manchon 21 et dudit fourreau 22 . Cette vis 23 est perpendiculaire à la direction selon laquelle s'étend le patin 4 auquel elle est associée, ainsi qu'à l'axe médian du manchon 21 et du fourreau 22 .La tête de cette vis 23 s'appuie sur une face extérieure dudit manchon 21 , l'extrémité de ladite vis 23 opposée à sa tête étant filetée et en saillie à l'extérieur dudit manchon 21 . Son filetage coopère au niveau de cette extrémité avec le filetage complémentaire d'un écrou 24 permettant de serrer ledit manchon 21 entre la tête de la vis 23 et ledit écrou 24.

Les moyens d'articulation 17 comportent encore un sabot anti-usure 25 également en forme de selle qui entoure le patin 4 de façon complémentaire à la partie 20 de l'étrier 19. Ce sabot anti-usure 25 est muni, au niveau de sa face destinée à être en contact avec le sol, d'une protubérance longitudinale de contact 26. Ce sabot 25 et l'étrier 19 sont solidarisés du patin 4 par l'intermédiaire de quatre vis 23 disposées au niveau de pattes 25a par lesquelles ledit sabot 25 recouvre sensiblement la partie 20 en forme de selle.

En se référant maintenant aux figures 5 et 7, on voit que les moyens d'articulation 18 reliant les patins 4 et une extrémité de la traverse 3 comporte un étrier 28 sensiblement analogue à l'étrier 19 précédemment décrit, puisqu'il comprend une partie formant selle 29, ainsi qu'une partie manchon 30 recevant l'extrémité de la traverse 3. Cette partie manchon 30 est associée à un fourreau élastomérique 31 polymérisé à la forme de la traverse 3 et à la forme intérieure dudit manchon 30. Les moyens 18 comportent également un sabot anti-usure 32 muni d'une protubérance de contact 32a et entourant partiellement le patin 4 auquel il est associé, de façon complémentaire à la partie formant selle 29. Ce sabot 32 se termine de part et d'autre du patin 4 auquel il est associé par une branche 33 qui recouvre partiellement l'étrier 28 au niveau duquel il est superposé à sa partie formant selle 29 et sur à partir du manchon 30. Ce sabot 32 est solidarisé du manchon 30 et de la traverse 3, par l'intermédiaire d'une vis 34 qui traverse les branches 33 dans leur épaisseur, les parois du manchon 30 et du fourreau élastomérique 31, ainsi que la traverse 3. La tête de ladite vis 34 s'appuie sur l'une des branches 33, tandis que l'extrémité filetée de ladite vis 34 en saillie par rapport à l'autre desdites pattes coopère avec un écrou qui réalise un serrage des pattes 33 dudit sabot 32 et du manchon 30 .

Les vis 23 et 34 sont chacune associées à une garniture élastomérique de protection, référencée respectivement par 23a et 34a , interposée entre ladite vis 23 ou 34 et les faces de l'évidement de la traverse 2 ou 3 qui la reçoit .

Ainsi , chaque étrier 19 est solidarisé au patin 4 auquel il est associé , tandis que ces étriers 28 sont montés pivotants autour des axes des vis 34 , sur les patins 4 auquels ils sont associés .

En se référant maintenant plus particulièrement aux figures 8 et 9 , on voit que chaque traverse 2 ou 3 est une lame flexible de section elliptique évolutive adaptée pour optimiser sa flexibilité longitudinale et transversale et lui donner également une masse optimale . Chaque traverse 2 ou 3 est réalisée en un faisceau 35 de stratifils de verre imprégnés de résine époxy , lesdits stratifils étant empilés unidirectionnellement avec arrêt progressif d'une partie d'entre eux pour réaliser la variation de section de la traverse 2 ou 3 . Les stratifils arrêtés sont de préférence les stratifils centraux proches de la fibre neutre ou médiane 36 de la traverse , de façon à limiter des amorces de rupture. Ce faisceau de stratifils de fibres de verre est entouré d'une peau 37 de tissus de verre dont les fils 38 sont tissés avec orientation à plus et moins 45° par rapport à la direction des fibres des nappes 35 . Cette peau de tissus de verre 37 permet d'améliorer la raideur et la résistance en torsion des traverses 2 et 3.

On donne ci-après un tableau de comparaison (tableau I) des paramètres de comportement élastique et plastique de matériaux classiquement utilisés jusqu'à présent pour réaliser des trains d'atterrissage , ainsi que du faisceau de stratifils de fibres de verre agglomérés par de la résine époxy polymérisée à chaud proposé par l'invention.

TABLEAU I

|  | Acier | Alliage d'aluminium | Faisceau de fibres de verre/résine époxy |
|---|---|---|---|
| Densité | 7,8 | 2,8 | 2,1 |
| Module (hb) | 20000 | 7000 | 5500 |
| σ élastique(hb) | 120 | 30 | 160 |
| W élastique (kj/kg) | 0,46 | 0,23 | 11,4 |
| σ rupture (hb) | 138 | 48 | 160 |
| Allongement | 13% | 10% | 2,9% |
| W plastique | 20,5 | 13,4 | - |
| W totale (kj/kg) | 21 | 14 | 11,4 |

Il ressort clairement de ce tableau que la capacité d'absorption élastique du faisceau de fibres de verre proposé par l'invention est bien meilleure que celle des alliages métalliques dans lesquels sont réalisés les trains classiques.Egalement , on notera que l'allongement utile du faisceau de fibres de verre, qui est de 2,9% à lieu de 13% pour l'acier, permet de réaliser les traverses avec des sections beaucoup plus plates, ce qui réduit d'autant la trainée aérodynamique du train d'atterrisage .

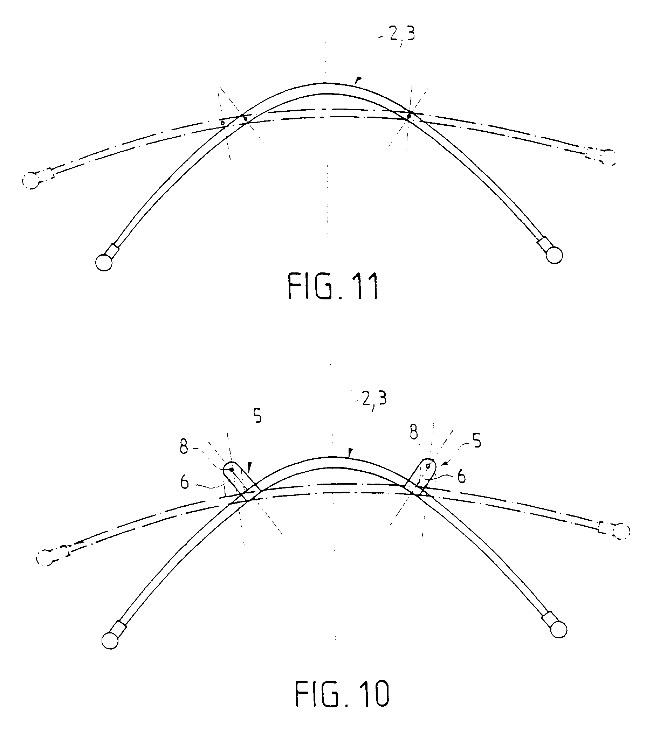

Lors d'un atterrissage , l'énergie cinétique de descente est absorbée par la déformation en flexion des traverses 2 et 3 . Une telle déformation a été représentée schématiquement en traits mixtes sur la figure 10 . Le rebond est freiné grâce au mouvement horizontal des patins 4 sur le sol ,tandis que la déformation verticale desdites traverses 2 ou 3 traduit la variation d'énergie cinétique de l'appareil H. L'architecture de train d'atterrissage qui vient d'être décrite permet d'optimiser l'absorption énergétique des traverses , pour les grandes déformées de celles-ci . Notamment , une importante partie de l'énergie d'atterrissage est absorbée par la portion des traverses 2 et 3 située entre les articulations 5 et la disposition déportée des axes 8 desdites articulations 5 permet la compensation de l'allongement des traverses des carcans 6 autour de leurs axes 8 . Ainsi que cela a été notamment illustré sur les figures 10 et 11 , on voit que le déport desdits axes (figure 10) permet de ne pas faire varier l'entraxe desdites fixations 5 , tandis que dans le cas de fixations sans déport (figure 11) , la flexion de l'arceau entraine une variation d'entraxe importante , qui sollicite le fuselage de l'hélicoptère . Par ailleurs, la liaison 18 entre les patins 4 et la traverse 3 , autorise des débattements angulaires entre ladite traverse 3 et lesdits patins 4 , liés angulairement à la traverse 2 par la liaison 17.

Il est à noter que l'architecture du train d'atterrissage qui vient d'être décrite est particulièrement adaptée à des aérodynes de type léger , tels que des hélicoptères de petite taille , à structure monocoque . Elle permet notamment sur ces appareils des liaisons traverses-fuselages proches de l'axe de l'appareil , ainsi qu'une faible trainée du train d'atterrissage . En outre, les énergies absorbées par le train conforme à l'invention sont 3 à 4 fois supérieures , à isomasse , à celle absorbée par des trains d'atterrissage du type classique , la course utile en flexion du train d'atterrissage étant maximisée grâce à l'architecture proposée par l'invention . En particulier , cette architecture permet d'éviter les déformations permanentes aux atterrissages durs qui apparaissent sur les trains d'atterrissages classiques , les facteurs de charge à l'atterrissage transmise à la cellule de l'aérodyne étant beaucoup plus faibles qu'avec les trains d'atterrissages classiques.

Les signes de référence insérés après les caractéristiques techniques mentionnées dans les revendications, ont pour seul but de faciliter la compréhension de ces dernières , et n'en limitent aucunement la portée .

**Revendications**

1.  Train d'atterrissage pour aérodyne , et notamment pour hélicoptère (H) , du type comprenant des organes (4) latéraux de contact avec le sol , tels que des patins , des skis , des flotteurs ou des organes analogues , lesdits organes (4) étant reliés entre eux et au fuselage de l'aérodyne (H) par au moins deux arceaux ou traverses (2,3) en matériau composite , caractérisé en ce que lesdites traverses (2,3) sort réalisées en un matériau stratifié à grande capacité d'absorption élastique et en ce qu'elles ont une forme fortement cintrée au niveau de leurs parties centrales par lesquelles elles sont reliées au fuselage de l'aérodyne (H) , la liaison (5) entre chacune desdites traverses (2,3) et ledit fuselage étant une liaison à encastrement longitudinal par rapport audit aérodyne , les organes (4) latéraux de contact avec le sol étant reliés auxdites traverses (2,3) par des moyens d'articulation (17,18) qui autorisent des grandes déformées desdites traverses (2,3) sans torsion desdits organes latéraux (4) .

2.  Train d'atterrissage selon la revendication 1, caractérisé en ce que les traverses (2,3) sont des lames flexibles réalisées en un matériau composite en fibres à haute résistance agglomérées avec une résine synthétique .

3.  Train d'atterrissage selon la revendication 2, caractérisé en ce que les fibres à haute résistance constituant les lames flexibles sont des fibres de verre.

4.  Train d'atterrissage selon l'une des revendications 2 ou 3 , caractérisé en ce que la résine synthétique qui agglomère les fibres à haute résistance constituant les lames flexibles est une résine synthétique thermodurcissable de type époxy.

5.  Train d'atterrissage selon l'une des revendications 2 à 4, caractérisé en ce que les lames flexibles comportent d'une part un noyau central formé par un faisceau de stratifils de fibres unidirectionnelles disposées longitudinalement selon l'envergure des lames et d'autre part une enveloppe de rigidification en torsion formée de tissus en composite dont les fils sont orientés à ± 45° par rapport à l'axe longitudinal des lames .

6. Train d'atterrissage selon l'une quelconque des revendications précédentes , caractérisé en ce que les traverses (2,3) sont de section évolutive optimisée pour un meilleure répartition des contraintes en flexion verticale et en flexion horizontale .

7. Train d'atterrissage selon la revendication 6 caractérisé en ce que les traverses (2,3) ont une section effilée .

8. Train d'atterrissage selon l'une quelconque des revendications 6 ou 7 , caractérisé en ce que les traverses (2,3) ont une section sensiblement elliptique .

9. Train d'atterrissage selon l'une quelconque des revendications 6 à 8 ,caractérisé en ce que les traverses (2,3) sont de section dégressive de leur partie centrale vers leur extrémité .

10. Train d'atterrissage selon la revendication 9 prise en combinaison avec l'une des revendications 2 à 5 , caractérisé en ce que les faisceaux constituant les traverses (2,3) sont réalisés par empilage des fibres unidirectionnelles avec arrêt progressif d'une partie de ces fibres , afin de réaliser la section évolutive desdites traverses .

11. Train d'atterrissage selon la revendication 10, caractérisée en ce que les fibres arrêtées sont des fibres proches des fibres centrales des traverses .

12. Train d'atterrissage selon l'une quelconque des revendications 6 à 11 , caractérisé en ce que la traverse (2) disposée à l'avant de l'aérodyne est sensiblement en arc de cercle .

13. Train d'atterrissage selon l'une quelconque des revendications 6 à 12, caractérisé en ce que la traverse (3) disposée à l'arrière de l'aérodyne est sensiblement parabolique .

14. Train d'atterrissage selon l'une quelconque des revendications précédentes , caractérisé en ce qu'une liaison (5)entre une traverse (2,3) et le fuselage de l'aérodyne (H) est réalisée par l'intermédiaire de deux carcans (6) dans lesquels ladite traverse (2,3) est encastrée au niveau de sa partie centrale , chacun de ces deux carcans (6) étant articulé sur le fuselage de l'aérodyne par une liaison pivot autour d'un axe (8) longitudinal par rapport à l'aérodyne (H).

15. Train d'atterrissage selon la revendication 14 prise en combinaison avec l'une des revendications 2 à 5 , caractérisé en ce que les axes (8) d'articulation en pivotement desdits carcans (6) sont déportés par rapport à la fibre neutre (36) de la traverse portée par lesdits carcans (6) .

16. Train d'atterrissage selon l'une des revendications 14 ou 15 , caractérisé en ce qu'un carcan (6) est réalisé en un matériau métallique collé sur la traverse (2,3) à laquelle il est associé .

17. Train d'atterrissage selon l'une quelconque des revendications précédentes , caractérisé en ce qu'un carcan est réalisé en un matériau composite surmoulé sur ladite traverse (2,3) .

18. Train d'atterrissage selon l'une quelconque des revendications précédentes , caractérisé en ce que les moyens d'articulation (17,18) entre une traverse (2,3) et un organe de contact latéral (4) comprennent un étrier (19,28) relié audit organe de contact (4) et solidarisé à l'une des extrémités de ladite traverse (2,3) notamment par l'intermédiaire d'un fourreau élastomérique (22,31) polymérisé sur ladite traverse (2,3) , ainsi que sur les parois internes dudit étrier.

19. Train d'atterrissage selon la revendication 18 , caractérisé en ce que les étriers (28) associés à la traverse (3) arrière dudit train d'atterrissage (1) sont aptes à pivoter par rapport aux organes (4) latéraux de contact avec le sol sur lesquels ils sont montés autour d'axes (34) sensiblement perpendiculaires auxdits (4) organes et s'étendant selon une direction sensiblement radiale par rapport à ladite traverse arrière (3) .

**20.** Train d'atterrissage selon l'une quelconque des revendications 18 ou 19 , caractérisé en ce que les moyens d'articulation (17) entre les traverses (2,3) et les organes latéraux (4) de contact avec le sol comprennent également des sabots (25, 32) anti-usure qui entourent partiellement lesdits organes (4) de contact au droit desdites traverses et au niveau de leurs parties par lesquelles ils sont destinés à être en contact avec le sol .

**21.** Train d'atterrissage selon les revendications 19 et 20 prises en combinaison , caractérisé en ce que les sabots anti-usure (25) associés à la traverse avant (2) dudit train d'atterrissage sont solidarisés aux étriers (19) de liaison associés à ladite traverse avant (2) , tandis que les sabots (32) anti-usure associés à la traverse arrière (3) sont reliés aux étriers associés à ladite traverse arrière (3) par une liaison autorisant leur pivotement relatif autour de l'axe (34) de pivotement étrier/organe de contact avec le sol .

**22.** Train d'atterrissage selon l'une quelconque des revendications précédentes , caractérisé en ce que la traverse arrière est également reliée au fuselage de l'aérodyne par l'intermédiaire d'amortisseurs (14) d'anti-résonance sol .

**Claims**

**1.** Landing gear for an aerodyne, and especially for a helicopter (H), of the type comprising lateral members (4) for contact with the ground, such as skids, skis, floats or similar members, the said members (4) being linked to one another and to the fuselage of the aerodyne (H) by at least two bows or cross-pieces (2, 3) in composite material, characterised in that the said cross-pieces (2, 3) are produced in a laminated material having high elastic absorption capacity and in that they exhibit a sharply curved shape in the area of their central parts by which they are linked to the fuselage of the aerodyne (H), the link (5) between each of the said cross-pieces (2, 3) and the said fuselage being a link with longitudinal embedding with respect to the said aerodyne, the lateral members (4) for contact with the ground being linked to the said cross-pieces (2, 3) by means of articulation (7, 18) which allow large deformations of the said cross-pieces (2, 3) without torsion on the said lateral members (4).

**2.** Landing gear according to claim 1, characterised in that the cross-pieces (2, 3) are flexible blades produced in a composite material in high-strength fibres agglomerated with a synthetic resin.

**3.** Landing gear according to claim 2, characterised in that the high-strength fibres constituting the flexible blades are glass fibres.

**4.** Landing gear according to any one of claims 2 or 3, characterised in that the synthetic resin which agglomerates the high-strength fibres constituting the flexible blades is a thermosettable synthetic resin of epoxy type.

**5.** Landing gear according to any one of claims 2 to 4, characterised in that the flexible blades comprise on the one hand, a central hub formed by a bundle of rovings of unidirectional fibres arranged longitudinally along the span of the blades and on the other hand, an envelope for stiffening in torsion formed by fabrics in composite whose threads are oriented at $\pm 45°$ with respect to the longitudinal axis of the blades.

**6.** Landing gear according to any one of the preceding claims, characterised in that the cross-pieces (2, 3) are of changing cross-section which is optimized for better distribution of the stresses in vertical deflection and in horizontal deflection.

**7.** Landing gear according to claim 6, characterised in that the cross-pieces (2, 3) exhibit a tapered cross-section.

**8.** Landing gear according to any one of claims 6 or 7, characterised in that the cross-pieces (2, 3) exhibit a substantially elliptical cross-section.

**9.** Landing gear according to any one of claims 6 to 8, characterised in that the cross-pieces (2, 3) are of decreasing cross-section from their central part toward their extremity.

10. Landing gear according to claim 9 taken in combination with one of claims 2 to 5, characterised in that the bundles constituting the cross-pieces (2, 3) are produced by stacking of unidirectional fibres with progressive stopping of a part of these fibres, so as to produce the changing cross-section of the said cross-pieces.

11. Landing gear according to claim 10, characterised in that the stopped fibres are fibres close to the central fibres of the cross-pieces.

12. Landing gear according to any one of claims 6 to 11, characterised in that the cross-piece (2) arranged at the front of the aerodyne is made substantially in an arc of a circle.

13. Landing gear according to any one of claim 6 to 12, characterised in that the cross-piece (3) arranged at the rear of the aerodyne is substantially parabolic.

14. Landing gear according to any one of the preceding claims, characterised in that a link (5) between a cross-piece (2, 3) and the fuselage of the aerodyne (H) is produced by use of two yokes (6) into which the said cross-piece (2, 3) is embedded in the area of its central part, each of these two yokes (6) being articulated onto the fuselage of the aerodyne by a pivot link around an axle (8) which is longitudinal with respect to the aerodyne.

15. Landing gear according to claim 14 taken in combination with one of claims 2 to 5, characterised in that the axes (8) for pivoting articulation of the said yokes (6) are offset with respect to the neutral fibre (36) of the cross-piece carried by the said yokes (6).

16. Landing gear according to any one of claims 14 or 15, characterised in that a yoke (6) is produced in a metal material bonded onto the cross-piece (2, 3) with which it is associated.

17. Landing gear according to any one of the preceding claims, characterised in that a yoke is produced in composite material overmoulded onto the said cross-piece (2, 3).

18. Landing gear according to any one of the preceding claims, characterised in that the means of articulation (17, 18) between a cross-piece (2, 3) and a lateral contact member (4) comprise a stirrup (1, 28) linked to the said contact member (4) and integrally fixed to one of the extremities of the said cross-piece (2, 3) especially by use of an elastomeric sheath (22, 31), which is polymerized onto the said cross-piece (2, 3), and onto the inner walls of the said stirrup.

19. Landing gear according to claim 18, characterised in that the stirrups (28) associated with the rear cross-piece (3) of the said landing gear (1) are able to pivot with respect to the lateral members (4) for contact with the ground on which they are mounted around axles (34) which are substantially perpendicular to the said members (4) and extend in a direction which is substantially radial with respect to the said rear cross-piece (3).

20. Landing gear according to any one of claims 18 or 19, characterised in that the means of articulation (17) between the cross-pieces (2, 3) and the lateral members (4) for contact with the ground also comprise anti-wear shoes (25, 32) which partially surround the said contact members (4) in line with the said cross-pieces and in the region of their parts by which they are intended to be in contact with the ground.

21. Landing gear according to claims 19 and 20 taken in combination, characterised in that the anti-wear shoes (25) associated with the front cross-piece (2) of the said landing gear are integrally fixed to the linking stirrups (19) associated with the said front cross-piece (2), while the anti-wear shoes (32) associated with the rear cross-piece (3) are linked to the stirrups associated with the said rear cross-pieces (3) by a link which allows their relative pivoting around the stirrup/member for contact with the ground pivoting axis (34).

22. Landing gear according to any one of the preceding claims, characterised in that the rear cross-piece is also linked to the fuselage of the aerodyne by use of anti-ground-resonance dampers (14).

**Patentansprüche**

1. Fahrwerk für ein Luftfahrzeug und insbesondere für einen Hubschrauber (H) der Bauart, die seitliche Organe (4) zur Bodenberührung, wie Kufen, Skier, Schwimmer oder analoge Organe umfaßt, wobei die Organe (4) untereinander und mit dem Rumpf des Luftfahrzeugs (H) über wenigstens zwei Bögen oder Traversen (2,3) aus Kompositmaterial verbunden sind,
**dadurch gekennzeichnet,**
daß die Traversen aus einem Schichtmaterial mit großem elastischem Absorptionsvermögen bestehen und daß sie eine in Höhe ihrer Mittelabschnitte stark gebogene Form aufweisen, an denen sie mit dem Rumpf des Luftfahrzeugs (H) verbunden sind, wobei die Verbindung (5) zwischen jeder der Traversen (2,3) und dem Rumpf eine Längseinbau-Verbindung bezüglich des Luftfahrzeugs ist, wobei die seitlichen Organe (4) zur Bodenberührung an den Traversen (2,3) mittels Gelenkmitteln (17,18) verbunden sind, welche große Verformungen der Traversen (2,3) ohne Torsion der seitlichen Organe (4) gestatten.

2. Fahrwerk nach Anspruch 1,
**dadurch gekennzeichnet,**
daß die Traversen (2,3) flexible Blätter sind, die aus einem Kompositmaterial mit Fasern hoher Festigkeit, die mit einem Kunstharz agglomeriert sind, bestehen.

3. Fahrwerk nach Anspruch 2,
**dadurch gekennzeichnet,**
daß die Fasern hoher Festigkeit, welche die flexiblen Blätter bilden, Glasfasern sind.

4. Fahrwerk nach einem der Ansprüche 2 oder 3,
**dadurch gekennzeichnet,**
daß das Kunstharz, welches die Fasern hoher Festigkeit agglomeriert, welche die flexiblen Blätter bilden, ein wärmehärtbares Kunstharz vom Epoxydtyp ist.

5. Fahrwerk nach einem der Ansprüche 2 bis 4,
**dadurch gekennzeichnet,**
daß die flexiblen Blätter einerseits einen zentralen Kern umfassen, der durch ein Bündel von Schichten einseitig gerichteter Fasern gebildet wird, welche in Längsrichtung gemäß dem Ausmaß der Blätter angeordnet sind, und andererseits eine Versteifungs-Umhüllung gegen Torsion umfaßt, die aus Kompositgewebe gebildet ist, dessen Fasern um $\pm 45°$ bezüglich der Längsachse der Blätter ausgerichtet sind.

6. Fahrwerk nach einem der vorangehenden Ansprüche,
**dadurch gekennzeichnet,**
daß die Traversen (2,3) einen sich verändernden Querschnitt aufweisen, der zur besseren Verteilung von Spannungen der vertikalen Biegung und horizontalen Biegung optimiert ist.

7. Fahrwerk nach Anspruch 6,
**dadurch gekennzeichnet,**
daß die Traversen (2,3) einen sich verjüngenden Querschnitt aufweisen.

8. Fahrwerk nach einem der Ansprüche 6 oder 7,
**dadurch gekennzeichnet,**
daß die Traversen (2,3) einen im wesentlichen elliptischen Querschnitt aufweisen.

9. Fahrwerk nach einem der Ansprüche 6 bis 8,
**dadurch gekennzeichnet,**
daß die Traversen (2,3) einen von ihrem mittleren Abschnitt zu ihrem Ende abnehmenden Querschnitt aufweisen.

10. Fahrwerk nach Anspruch 9 in Verbindung mit einem der Ansprüche 2 bis 5,
**dadurch gekennzeichnet,**
daß die Bündel, welche die Traversen (2,3) bilden, aus einer Schichtung einseitig gerichteter Fasern mit progressivem Halten eines Teils dieser Fasern gebildet sind, um den sich verändernden Querschnitt dieser Traversen zu bilden.

**11.** Fahrwerk nach Anspruch 10,
**dadurch gekennzeichnet,**
daß die gehaltenen Fasern Fasern sind, die den zentralen Fasern der Traversen nahe sind.

**12.** Fahrwerk nach einem der Ansprüche 6 bis 11,
**dadurch gekennzeichnet,**
daß die Traverse (2), die vorne an dem Luftfahrzeug angeordnet ist, im wesentlichen kreisbogenförmig ist.

**13.** Fahrwerk nach einem der Ansprüche 2 bis 12,
**dadurch gekennzeichnet,**
daß die Traverse (3), die hinten an dem Luftfahrzeug angeordnet ist, im wesentlichen parabelförmig ist.

**14.** Fahrwerk nach einem der vorangehenden Ansprüche,
**dadurch gekennzeichnet,**
daß eine Verbindung (5) zwischen einer Traverse (2,3) und dem Rumpf des Luftfahrzeugs (H) durch zwei Halseisen (6) gebildet wird, in welche die Traverse (2,3) in Höhe ihres Mittelteils eingefügt ist, wobei jedes dieser beiden Halseisen (6) an dem Rumpf des Luftfahrzeugs durch eine Schwenkverbindung um eine Achse (8) angelenkt ist, welche bezüglich des Luftfahrzeugs (H) in Längsrichtung verläuft.

**15.** Fahrwerk nach Anspruch 14 in Verbindung mit einem der Ansprüche 2 bis 5,
**dadurch gekennzeichnet,**
daß die Schwenkachsen (8) der Halseisen (6) bezüglich der neutralen Faser (36) der Traverse versetzt sind, die von den Halseisen getragen wird.

**16.** Fahrwerk nach einem der Ansprüche 14 oder 15,
**dadurch gekennzeichnet,**
daß ein Halseisen aus einem metallischen Material hergestellt ist, welches auf die Traverse (2,3) aufgeklebt ist, mit der es verbunden ist.

**17.** Fahrwerk nach einem der vorangehenden Ansprüche,
**dadurch gekennzeichnet,**
daß ein Halseisen aus einem Kompositmaterial besteht, welches auf die Traverse (2,3) gegossen ist.

**18.** Fahrwerk nach einem der vorangehenden Ansprüche,
**dadurch gekennzeichnet,**
daß die Anlenkmittel (17,18) zwischen einer Traverse (2,3) und einem seitlichen Berührungsorgan (4) einen Bügel (19,28) umfassen, welcher an dem Berührungsorgan (4) angebracht ist und an einem der Enden der Traverse (2,3) insbesondere unter Zwischenlage einer elastomeren Umhüllung (22,31) angebracht ist, die auf den Bügel (2,3) wie auf die Innenwände des Bügels polymerisiert ist.

**19.** Fahrwerk nach Anspruch 18,
**dadurch gekennzeichnet,**
daß die Bügel (28), die an der hinteren Traverse (3) des Fahrwerks (1) angebracht sind, dazu eingerichtet sind, bezüglich der seitlichen Organe (4) zur Bodenberührung, an denen sie angebracht sind, um Achsen (34) im wesentlichen rechtwinklig zu den Organen (4) zu schwenken und sich in einer Richtung erstrecken, die bezüglich der hinteren Traverse (3) im wesentlichen radial verläuft.

**20.** Fahrwerk nach einem der Ansprüche 18 oder 19,
**dadurch gekennzeichnet,**
daß die Anlenkmittel (17) zwischen den Traversen (2,3) und die seitlichen Organe (4) zur Bodenberührung weiterhin Schuhe (25,32) gegen Verschleiß umfassen, welche die Berührungsorgane (4), wo sie auf die Traversen stoßen, und in Höhe ihrer Abschnitte, die dazu bestimmt sind, mit dem Boden in Berührung zu gelangen, umgreifen.

EP 0 512 897 B1

21. Fahrwerk nach den Ansprüchen 19 und 20 gemeinsam,
**dadurch gekennzeichnet,**
daß die Schuhe (25) gegen Verschleiß, die mit der vorderen Traverse (2) des Fahrwerks verbunden sind, mit Verbindungsbügeln (19), die an der vorderen Traverse (2) angebracht sind, in Verbindung stehen, während die Schuhe (32) gegen Verschleiß, die mit der hinteren Traverse (3) verbunden sind, mit Bügeln in Verbindung stehen, die an der hinteren Traverse (3) über eine Verbindung angebracht sind, welche ihre Relativschwenkbewegung um die Schwenkachse (34) Bügel /Organ zur Bodenberührung gestatten.

22. Fahrwerk nach einem der vorangehenden Ansprüche,
**dadurch gekennzeichnet,**
daß die hintere Traverse ebenfalls mit dem Rumpf des Luftfahrzeugs über Dämpfer (14) gegen die Bodenresonanz verbunden ist.

13

FIG. 1

FIG. 2

EP 0 512 897 B1

FIG. 1A

FIG. 3

15

FIG. 4

FIG. 5

FIG. 6

FIG. 7

EP 0 512 897 B1

FIG. 8

FIG. 9

EP 0 512 897 B1

FIG. 11

FIG. 10